# EUROPEAN PATENT APPLICATION

(11) **EP 4 557 013 A1**
(43) Date of publication of application: **21.05.2025**
(21) Application number: 24209242.7
(22) Date of filing: 28.10.2024
(51) Int. Cl.: G03H 1/02, G03H 1/22, G02B 3/08, G02B 27/09, G02B 3/00, G02B 5/04, G02B 27/01, G02B 27/00, G03H 1/08

(54) **LIGHT CONTROL DEVICE**

(30) Priority: 17.11.2023 GB 202317637; 07.02.2024 GB 202401627; 26.02.2024 GB 202402682
(71) Applicant: Envisics Ltd, Milton Keynes MK1 1PT (GB)
(72) Inventor: LIN, Ruisheng, Milton Keynes, MK1 1PT (GB); SMEETON, Timothy, Milton Keynes, MK1 1PT (GB)
(74) Representative: Greenaway, Martin William

(57) **Abstract**

A display system is provided. The display system comprises a replicator arranged to receive spatially modulated light and replicate the spatially modulated light to form a plurality of replicas of the spatially modulated light by waveguiding between a reflective surface and a transmissive-reflective surface. The transmissive-reflective surface forms an output surface for the plurality of replicas of the spatially modulated light. The display system further comprises a light control device located in the optical path of the plurality of replicas of the spatially modulated light downstream from the output surface of the replicator. The light control device is arranged to provide a first compensation for the curvature of a curved optical component downstream from the light control device. The first compensation is a function of the position on the output surface and is arranged to only partially counteract the curvature of the optical component and retain some distortion from the curvature of the optical component of at least one of the replicas compared to another of the replicas.

## Description

### FIELD

The present disclosure relates to a display system comprising a light control device. The present disclosure also relates to a light control device such as a thin film and a method of compensating for the curvature of an optical combiner such as a vehicle windscreen. Some embodiments relate to a holographic projector, picture generating unit or head-up display.

### BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

### SUMMARY

Aspects of the present disclosure are defined in the appended independent claims.

In general terms, there is provided a light control device or glare mitigation device for display light that is arranged to compensate for the curvature of a curved optical component on an optical path of the display light. In embodiments, the light control device or glare mitigation device is for display light of a display system. In embodiments, the curved optical component is on an optical path of the display system. In some embodiments, the curved optical component is an optical combiner, such as a vehicle windscreen, arranged to redirect display light from a display device to a viewing window or so-called eye-box. The optical component may have a first curvature in a first direction and a second curvature in a second direction perpendicular to the first direction. The first and/or second curvature may be nonlinear. The optical component has a complex curvature which introduces complex distortions when used in a display system particularly one based on holographic projection.

The display light may be spatially modulated light. The display system may be arranged to relay the spatially modulated light to a viewing plane or eye-box. In some embodiments, the display system is a holographic display system and the spatially modulated light is light that is spatially modulated in accordance with a hologram. The spatially modulated light may be referred to as a holographic wavefront. In other embodiments, the display system is an image or picture display system (e.g. part of a conventional picture generating unit) and the spatially modulated light is light that is spatially modulated in accordance with an image or picture. In these embodiments, the spatially modulated light may be referred to as an image or picture wavefront. The picture wavefront may be received from a screen or diffuser. The picture wavefront may therefore be diffuse and/or contain a range of light ray angles. The light control device of the present disclosure provides a means for controlling reflections of ambient light to prevent or suppress glare from reaching the viewing plane while allowing the spatially modulated light to reach the viewing plane. For example, the display device may comprise an optical component comprising a reflective surface. In the absence of the light control device, ambient light may be reflected by the reflective surface towards the viewing plane / eye-box of the display device thus forming glare. The light control device of the present disclosure is arranged to suppress such reflections.

As above, the light control device of the present disclosure is further arranged to compensate for the curvature of a curved optical component on an optical path of the display system. The curved optical component being on the optical path of the display system may mean that the spatially modulated light, propagating through the display system, may be incident on, reflected by, transmitted through, or otherwise interact with the curved optical component. As the skilled person will appreciate, the curvature of the optical component may alter the divergence or convergence of the spatially modulated light and angles thereof. For example, if the spatially modulated light is substantially collimated upstream of the curved optical component (prior to interacting with the optical component), then the spatially modulated may be non-parallel (e.g. converging or diverging) downstream of the curved optical component (after interacting with the optical component). In other words, the curved optical component may have a lensing effect on the spatially modulated light incident thereon. If the curvature of the curved optical component is non-uniform, then the lensing effect may be non-uniform. For example, different portions of the curved optical component may have a different radius of curvature and so may have a different lensing effect on spatially modulated light incident thereon. In some embodiments, the curved optical component is a windscreen or windshield of a vehicle. A windscreen or windshield may have a complex curvature having a complex lensing effect on display light incident thereon.

The inventors have identified a number of problems associated with the lensing effect of the curved optical component. One problem is that the lensing effect may distort the display light (of the display system). For example, the display light may be such that a picture is viewable at a viewing plane. For example, the display light may be spatially modulated in accordance with a hologram of a picture, or simply in accordance with a picture. The lensing effect of the curved optical component may distort the picture that is viewable at the viewing plane. This may adversely affect a viewing experience of the display system. Another problem identified by the inventors is specific to display systems comprising a replicator, upstream of the curved optical component. The replicator may be arranged to replicate the spatially modulated light to form a plurality of replicas of the spatially modulated light. For example, if the spatially modulated light is a holographic wavefront, the replicator may be arranged to form a plurality of replicas of the holographic wavefront. In embodiments, the replicator may be a waveguide, as described below. For example, the waveguide may comprise an input port arranged to receive the spatially modulated light. The waveguide may comprise a pair of surfaces arranged to waveguide the spatially modulated light received at the input therebetween. A first surface of the pair of surfaces may be partially-transmissive partially-reflective. The first surface may be arranged to form the plurality of replicas of the spatially modulated light. At least a portion of the first surface may be said to form an output port of the replicator / waveguide. The replicator may be arranged such that the plurality of replicas are relayed towards the curved optical component. The display system may be further arranged such that the plurality of replicas are relayed towards a viewing plane / eye-box of the display system. The inventors have found that the pitch of the replicas of the spatially modulated light (at the viewing plane) is important for ensuring a good viewing experience. Through simulation and experimentation, the inventors have further found that the pitch of the replicas may be affected by the lensing effect of the curved optical component. For example, the pitch of the replicas at the viewing plane may be increased or decreased. This may adversely affect the viewing experience. For example, if the pitch of the replicas is reduced, so-called ghosting effects, in which a copy of the intended picture or image content is displayed slightly offset from the intended picture or image content, may become more apparent. The pitch of the replicas may be reduced if the curved optical component has a concave shape, for example the inside surface of a windscreen or windshield. As used herein, the pitch of replicas refers to the separation or distance between the centres of adjacent replicas.

Light control devices / glare mitigation devices for reflection / glare suppression have been previously disclosed, for example, in UK patent number GB2607672 and UK patent application number GB2303536.3 (publication number GB2627988A). Light control devices for compensating for the curvature of the curved optical component have also been disclosed in UK patent applications 2317637.3 and 2401627.1. These applications are hereby incorporated by reference.

However, the inventors have addressed the issue that mitigating the lensing effect of the curved optical component solely with a physical lens as described in these applications requires a different lens for any change in the curved optical component. For example, if the curved optical component is a windscreen of a vehicle, a different lens would have to be used for each different vehicle line to which the system needed to be fit. If the lens has not been fine-tuned or optimised to the curvature of the curved optical component, then elements of the issues described above may still remain. This requires substantial additional development time and expense, as the fine-tuning/optimisation process of the lens to each and every vehicle line has to be completed, as well as additional manufacturing complexity, as any production facility would have to deal with multiple different lenses used in conjunction with the various curved optical components.

According to a first aspect of the present disclosure, a display system is provided. The display system comprises a replicator arranged to receive spatially modulated light and replicate the spatially modulated light to form a plurality of replicas of the spatially modulated light by waveguiding between a reflective surface and a transmissive-reflective surface. The transmissive-reflective surface forms an output surface for the plurality of replicas of the spatially modulated light. The display system further comprises a light control device located in the optical path of the plurality of replicas of the spatially modulated light downstream from the output surface of the replicator. The light control device is arranged to provide a first compensation for the curvature of a curved optical component downstream from the light control device. The first compensation is a function of the position (or location) on the output surface (or on the light control device) and is arranged to only partially counteract the curvature of the optical component. In other words, the first compensation is non-constant or varies across the position of the output surface or light control device.

That is, for each position on the output surface of the replicator, a corresponding point of the light control device provides a compensation for the curvature of a corresponding point of the curved optical component. By "corresponding" points, is meant the points on the light control device or curved optical component that will interact with a replica emitted from any given point on the output surface of the replicator - i.e. points on the light control device, curved optical component and output surface of the replicator connected by the same replica when ray tracing the replicas through the system. The compensation provided by the light control device to a replica emitted from a given point on the output surface may vary compared to the compensation provided by the light control device to a replica emitted from a neighbouring point on the output surface, and as such the first compensation varies across the output surface (i.e. is a function of the position on the output surface). In other words, for an output surface that has a first and second dimension, with replicas being emitted from the output surface in (an array of) the first and second dimensions, the compensation provided to any of the replicas by the light control device will depend on the position of the corresponding point of the output surface in the first and second dimensions from which said replica was emitted. That is, the compensation is a function of a least one dimension of the component, such as x or y. Whilst the discussion herein has referred to "points" of the output surface, light control device and curved optical component, it would be understood by the skilled person that this may be purely illustrative. It may be the case that, rather than corresponding finite "points", it is "areas" of the light control device that provide the required compensation for the curvature of corresponding areas of the curved optical component.

The wording "partial compensation" is used herein to reflect that the first compensation is arranged to retain some distortion from the curvature of the optical component. This distortion may be distortion of at least one of the replicas compared to another of the replicas. The first compensation has a magnitude which reduces the (wavefront) distortion caused by the curvature of the optical component, but does not completely eliminate it. That is, some (wavefront) distortion is retained despite the partially corrective effect of the light control device. In other words, the (wavefront) distortion is lesser (has a lower magnitude) with the first (partial) compensation than were the first (partial) compensation not present, but not as low as if a full compensation were present.

In other words, a projector is provided comprising a replicator and a light control device. The replicator is arranged to receive spatially modulated light and replicate the spatially modulated light to form a plurality of replicas of the spatially modulated light by waveguiding between a reflective surface and a transmissive-reflective surface. The transmissive-reflective surface forms an output surface for the plurality of replicas of the spatially modulated light. The light control device (e.g. a lens, embodied as a thin film) is located in the optical path of the plurality of replicas of the spatially modulated light downstream from the output surface of the replicator and arranged to provide a first partial compensation (e.g. a first negative optical power) for the curvature of a curved optical combiner (e.g. having positive optical power) used in cooperation with (e.g. to receive light of) the projector. The first partial compensation is a function of the position on the output surface that does not completely counteract the curvature of the optical combiner.

As such, the inventors have found that purposefully choosing a light control device that only partially compensates for the curvature of the curved optical component allows for fine-tuning of the system in other ways to fit the specific curved optical component. This allows the same system and light control device to be used with a wide range of curved optical components, removing the aforementioned additional development and manufacturing time and expense.

Compensation, or alternatively correction, can account for any optical effect (e.g. wavefront distortion, aberration or disparity, for example) imparted upon any or all of the replicas by (the curvature of) the curved optical component. In other words, the aim of the (partial) compensation is that at least one of the optical properties or characteristics (e.g. size, shape, aspect ratio...) of at least one of the replicas after interacting with the curved optical component is closer to the intended optical property or characteristic than had the compensation not be in place. In summary, the compensation is to reduce the (wavefront) distortion of the replicas compared to one another, where distortion is a change in optical property compared to its intended value.

The spatially modulated light may be a holographic wavefront and the replicator may be arranged to form a plurality of replicas of the holographic wavefront. In this way, the system can be used with a holographic projector. In other embodiments, the spatially modulated light is a wavefront of a picture.

The light control device may comprise lens or a lensing function, optionally a Fresnel structure having a lens effect. The physical lens may be a film, optionally with a thickness of less than 5mm, such as less than 2mm, 1 mm or 0.5mm. This device provides the required compensation/correction whilst minimising the space it takes up in the system, reducing packaging constraints.

The first compensation may have an opposite lensing effect to that of the curved optical component. For the avoidance of doubt, the word "opposite" is used herein in relation to direction but not necessarily magnitude. That is, the opposite lensing effect is opposite in direction but not magnitude. The first compensation may be a negative optical power. The curved optical component may be a positive optical power. Thus, corresponding optical power is provided by the compensation to account for the optical power of the curved optical component.

The display system may further comprise a processor arranged to determine a hologram of an image and a lens function that provides a second compensation for the curvature of the curved optical component downstream from the light control device. The second compensation is arranged to only partially counteract the curvature of the optical component. The second compensation may also be arranged to retain some distortion from the curvature of the optical component (such as at least some of the distortion) of at least one of the replicas compared to another of the replicas. The display system may also further comprise a display device arranged to spatially modulate light in accordance with a diffractive pattern displayed thereon. The diffractive pattern comprises the hologram and the lens function.

In other words, the system (or projector) may also comprise a processor arranged to determine a hologram of a picture and a (pixelated) lens function that provides a second partial compensation (e.g. a second negative optical power) for the curvature of the curved optical combiner (e.g. having positive optical power) used in cooperation with (e.g. to receive light of) the projector. The system (or projector) may also comprise a display device arranged to spatially modulate light in accordance with a diffractive pattern display thereon, wherein the diffractive pattern comprises the hologram and the lens function (e.g. the superposition or sum thereof).

In some embodiments, the combination of the light control device (providing a hardware compensation/correction) and the lens function of the processor (providing a software compensation/correction) allows for complete correction or compensation for any curvature of curved optical component without changing the hardware used for each and every differing curved optical component. That is, the majority of the correction/compensation is completed by the light control device, and the fine-tuning is carried out by the software of the processor. This allows for a set/fixed "one size fits all" (hardware) system to be used regardless of the curvature of the curved optical component, thereby reducing the development and manufacture time associated with producing a new light control device for any new curved optical component the system is used in conjunction with.

In other words, the light control device is a passive component (i.e. one that cannot be changed during use as may be required). As such, in order to add a degree of freedom for the correction/compensation of the curvature of the curved optical component, the light control device dos not exactly compensation for the optical power of the curved optical component. Rather, the light control device compensates for low order optical power (such as defocus and astigmatism), whilst the software-based compensation is used for fine tuning.

This combination of hardware and software compensation/correction has further benefits over correction using purely a hardware or software solution. As discussed above, using a purely hardware correction/compensation would result in a new piece of hardware having to be installed for each curvature of curved optical component the system was to be used with. The benefits over a purely software solution are discussed below.

The depth information of the virtual image (that is, the image that the viewer observes or perceives) is encoded in the wavefront of replicas emitted from the output surface of the replicator. When the wavefront is reflected by the curved optical component, because of the curvature of said component a positive optical power is added to the wavefront which pushes the image further away and increases the virtual image distance (the distance at which the viewer observes the virtual image). This may result in the virtual image being too far away to be clearly viewable to the viewer, or in the wrong position relative the viewer's surroundings. In order for the viewer to perceive the correct virtual image distance, the wavefront needs to be pre-aberrated with an opposite optical power (i.e. negative power) before it hits the curved optical component.

An instinctive way to add negative power would be to apply a negative software lens "on top" of the hologram via the processor responsible for generating the hologram. While this can indeed bring the virtual image back to its nominal distance, the inventors have found pronounced ghost artefacts are introduced as the distance between the virtual image and the display device is reduced. The more curved the curved optical component, the stronger the optical power needed to add to the hologram, and the more of the ghosting effect that has been observed.

As such, the inventors discovered that a better way to correct the virtual image distance is to add negative power after the replicator. Adding such a negative light control device brings the virtual image closer to the viewer which produces the correct virtual image distance. However, as discussed above, using (only) a hardware solution is sub-optimal for development and manufacturing time and costs, hence the software solution is included (in a more complementary capacity) to fine-tune the compensation/correction. In other words, the power of the hardware lens will be similar to the defocus and astigmatism of the curved optical component, whilst the software correction will be a fine-tuning depending on the actual curved optical component and system parameters such as the field of view. There can be a large number of terms (i.e. Zernike polynomials) in the software correction. Furthermore, the inventors discovered that only using the hardware solution does not completely recover the image quality from the curved optical component. However, residual ghost artefacts can be removed by software-based anti-ghosting techniques known to the inventors during the computation of the hologram.

The inventors discovered that there are two critical planes when designing such a display system: the plane where the display is and the plane where the virtual image is. The optical power of the curved optical component will push both of these planes further away, and hence the virtual image will appear to the viewer to be too far from the intended distance. Using a negative software lens will bring the virtual image closer but the display device stays at same distance, therefore the separation between the virtual image and the display device will decrease (introducing more ghosts). A hardware lens is added between the display device and the viewer as it will bring both the virtual image and display device closer, so that the separation between them remains long enough to avoid ghosts. In summary, the software lens can only affect the virtual image but not the display device, whilst the hardware lens can affect both.

For the best performance, a thin negative lens made from high quality optical glass is preferred. However, in some embodiments, a Fresnel structure such as a Fresnel lens is used to reduce the overall volume and weight of the units. It may be said that the Fresnel structure has a lensing effect or optical power. Alternatively, it may be said that the light control device comprises a Fresnel structure or a phase-wrapped structure.

The lens function may be a pixelated lens function. The second compensation may be a negative optical power. The diffractive pattern may comprise a superposition or sum of the hologram and the lens function. In this way, the software part of the correction/compensation is included as part of the replicas that are reflected by the curved optical component.

The display system may further comprise a viewer tracking system arranged to determine a position within an eye-box and correlate said position with a sub-area of the curved optical component and a position on the output surface of the replicator. The first and second compensations may compensate for the curvature of the sub-area of the curved optical component.

In overview, there is disclosed herein a hybrid software-hardware approach to compensating for the curvature of the curved optical component e.g. combiner such as windscreen. The first compensation and the second compensation may collectively provide a full compensation for the curvature of the curved optical component. In other words, the correction/compensation previously provided by a bespoke hardware solution for each and every differing curved optical component is achieved in the present disclosure by the summation of the correction/compensation provided by the software and hardware solutions.

The first compensation may be 2 to 10 times the second compensation. Alternatively, the first compensation may provide a virtual image offset correction in the range of 75% to 99% and the second compensation may provide a virtual image offset correction in the range of 1% to 25%. In other words, the bulk/majority of the correction/compensation is achieved with the hardware solution, with fine-tuning of the correction/compensation achieved by the software solution. The person skilled in the art will understand how an optical power associated with the curved optical component causes a change in the image distance. The virtual image offset may therefore be a distance. The virtual image offset correction is therefore a percentage change of image distance.

A magnitude of the first and/or second compensation may be such that spacing of each of the plurality of replicas at a viewing plane of the display system may be at least half the size of a human pupil.

Likewise, according to a second aspect of the present disclosure, there is provided a display system. The display system comprises a replicator arranged to receive spatially modulated light and replicate the spatially modulated light to form a plurality of replicas of the spatially modulated light by waveguiding between a reflective surface and a transmissive-reflective surface. The transmissive-reflective surface forms an output surface for the plurality of replicas of the spatially modulated light. The display system further comprises a light control device located in the optical path of the plurality of replicas of the spatially modulated light downstream from the output surface of the replicator. The light control device is arranged to provide a compensation for the curvature of a curved optical component downstream from the light control device. The compensation is a function of the position on the output surface. A magnitude of the first and/or second compensation is such that spacing of each of the plurality of replicas at a viewing plane of the display system may be at least half the size of a human pupil.

In order to produce a complete image to the viewer, their eyes must be tracked to ensure that the correct replicas are able to pass through their pupils to arrive at their retinas (and hence be seen by the viewer) and, optionally, to provide 3D display. If the correct replica or replicas are not admitted through the pupils, then at least part of the intended image may be missing to the viewer or crosstalk problems may arise. Likewise, if multiple conflicting replicas arrive at the eye, ghosts of (other) images may appear. This is especially problematic with the presence of the curved optical component, which can cause the multiple replicas to arrive at the viewer at different phases (due to the different phases imparted upon the different replicas due to the curvature of the component), resulting in a distortion of the image to the viewer. As such, a large amount of computational power can be spent tracking the viewer's eyes within an eye-box, to ensure that this sort of distortion and ghosting is minimised or removed.

By increasing the spacing of the replicas, it decreases the chance of multiple conflicting replicas being admitted through the viewer's pupil's at once and causing the image distortion described above. This reduces the demands on the eye-tracking system, due to the reduced chance of multiple conflicting replicas being admitted through the viewer's pupil. As such, the demands on the eye-tracking system can be relaxed

The inventors discovered that this can be achieved using the hardware correction as described above. The hardware correction in effect brings the display device closer to the eye-box, which in turn effectively increases the separation between replicas, and hence allows more tolerance from the eye-tracking.

The inventors have found that, optimally, the compensation for the curvature of the curved optical component may be such that a footprint of the viewing pupil on the display device encompasses at least 50 pixels of the display device, optionally 50 to 75 pixels or alternatively optionally 100 pixels. The compensation for the curvature of the curved optical component may be such that a footprint of the viewing pupil on the display device is substantially symmetrical. The compensation for the curvature of the curved optical component may be such that a footprint of the viewing pupil on the display device has an area with an aspect ratio in the range of 1:1 to 1:1.25.

Likewise, according to a third aspect of the present disclosure, there is provided a display system. The display system comprises a replicator arranged to receive spatially modulated light and replicate the spatially modulated light to form a plurality of replicas of the spatially modulated light by waveguiding between a reflective surface and a transmissive-reflective surface. The transmissive-reflective surface forms an output surface for the plurality of replicas of the spatially modulated light. The display system further comprises a light control device located in the optical path of the plurality of replicas of the spatially modulated light downstream from the output surface of the replicator. The light control device is arranged to provide a compensation for the curvature of a curved optical component downstream from the light control device. The compensation is a function of the position on the output surface. The display system also further comprises a display device arranged to spatially modulate light. The compensation for the curvature of the curved optical component may be such that a footprint of the viewing pupil on the display device encompasses at least 50 pixels of the display device, optionally 50 to 75 pixels or alternatively optionally 100 pixels. Alternatively, the compensation for the curvature of the curved optical component may be such that a footprint of the viewing pupil on the display device is substantially symmetrical. Alternatively, the compensation for the curvature of the curved optical component may be such that a footprint of the viewing pupil on the display device has an area with an aspect ratio in the range of 1:1 to 1:1.25.

The inventors have discovered, by ray-tracing of the optical pathways of the replicas through the system back to the display device, that the distortion of the curved optical component also reduces and distorts the area on the display device which is responsible for a particular point of the image that the viewer perceives. For example, if the area on the display device is a circle or roughly/substantially circular, the distortion caused by the curved optical component may be such that the area becomes elliptical. That is, the width of the circular area in a first direction may remain the same, but reduce in a second direction perpendicular to the first direction. In summary, the distortion removes the symmetry from the area, reduces its size and increases its aspect ratio. The quality of each point in the reconstructed image will largely depend on how many pixels are contributing to that point and how those pixels are distributed.

By utilising the compensation described in the present disclosure, the inventors have found that the area on the display device can be at least partially restored to the shape and size that it would have been if said distortion had not occurred. That is, the width of the area in the second direction may be closer to that of the first direction. In other words, the compensation increases the symmetry of the area, increases its size and reduces its aspect ratio. This increase in area of the display device responsible for each point of the image perceived by the viewer means that the image can be rendered in greater/finer detail (in other words, at a higher resolution). The inventors have found that the perceived image quality e.g. resolution can be improved using this approach.

The display system may further comprise the curved optical component located downstream from the light control device. The curved optical component may be an optical combiner. The curved optical component may be a windscreen of a vehicle.

The light control device may further include the functionality of a "turning film" (i.e. the light control device may act as a turning film). That is, the light control device may provide a "global turn" (i.e. provide an equal, minimum, amount of turn to each replica) that moves the position of the eye-box/viewing window to a position that is more comfortable and/or accessible for the viewer/user. In other words, the first compensation function may have a (static) coefficient such that each position on the light control device provides a minimum amount of turn.

According to a fourth aspect of the present disclosure, a method of processing spatially modulated light is provided. The method comprises receiving spatially modulated light at a replicator, the replicator having a reflective surface and a transmissive-reflective surface. The transmissive-reflective surface forms an output surface. The method further comprises replicating the spatially modulated light to form a plurality of replicas of the spatially modulated light by waveguiding the spatially modulated light between the reflective surface and the transmissive-reflective surface. The plurality of replicas of the spatially modulated light are output from the replicator at the output surface. The method also comprises receiving the plurality of replicas at a light control device. Finally, the method comprises providing, via the light control device, a first compensation for the curvature of a curved optical component downstream from the light control device. The first compensation is a function of the position on the output surface and is arranged to only partially counteract the curvature of the optical component.

In this way, a method is provided that provides the benefits of utilising a partial compensation as is discussed above in relation to the first aspect of the present disclosure.

The method may further comprise determining, via a processor, a hologram of an image and a lens function that provides a second compensation for the curvature of the curved optical component downstream from the light control device. The second compensation is arranged to only partially counteract the curvature of the optical component. The method may also comprise spatially modulating light on a display device in accordance with a diffractive pattern displayed thereon. The diffractive pattern comprises the hologram and the lens function.

A magnitude of the first and/or second compensation may be such that a spacing of each of the plurality of replicas at a viewing plane of the display system is at least half the size of a human pupil. The compensation for the curvature of the curved optical component may be such that a footprint of the viewing pupil on the display device encompasses at least 50 pixels of the display device, optionally 50 to 75 pixels or alternatively optionally 100 pixels.

It would be understood that the features discussed above relating to the display system of the first aspect of the present disclosure may also be a feature of the display systems of the second and third aspects of the present disclosure and/or the method of the fourth aspect of the present disclosure, and vice versa.

In the present disclosure, the term "replica" is merely used to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. It may therefore be said that a plurality of replicas of the hologram are formed. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer. The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude and phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to 2π) which represents the amount of phase retardation provided by that pixel. For example, a pixel of the spatial light modulator described as having a phase value of rr/2 will retard the phase of received light by π/2 radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

### BRIEF DESCRIPTION OF THE DRAWINGS

Specific embodiments are described by way of example only with reference to the following figures:
Figure 1 is a schematic showing a reflective SLM producing a holographic reconstruction on a screen;
Figure 2 shows an image for projection comprising eight image areas/components, V1 to V8, and cross-sections of the corresponding hologram channels, H1-H8;
Figure 3 shows a hologram displayed on an LCOS that directs light into a plurality of discrete areas;
Figure 4 shows a system, including a display device that displays a hologram that has been calculated as illustrated in Figures 2 and 3;
Figure 5A shows a perspective view of a first example two-dimensional pupil expander comprising two replicators each comprising pairs of stacked surfaces;
Figure 5B shows a perspective view of a first example two-dimensional pupil expander comprising two replicators each in the form of a solid waveguide;
Figure 6 is a diagrammatic view of a system according to the prior art;
Figure 7 is a diagrammatic view of a system in accordance with embodiments of the present disclosure;
Figure 8A is a diagrammatic view of an LCOS in an ideal system;
Figure 8B is a diagrammatic view of an LCOS in a system according to the prior art; and
Figure 8C is a diagrammatic view of an LCOS in a system in accordance with embodiments of the present disclosure.

The same reference numbers will be used throughout the drawings to refer to the same or like parts.

### DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike - the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

Features of different embodiments may be partially or overall coupled to or combined with each other, and may be variously inter-operated with each other. Some embodiments may be carried out independently from each other, or may be carried out together in co-dependent relationship.

In the present disclosure, the term "substantially" when applied to a structural units of an apparatus may be interpreted as the technical feature of the structural units being produced within the technical tolerance of the method used to manufacture it.

### Conventional optical configuration for holographic projection

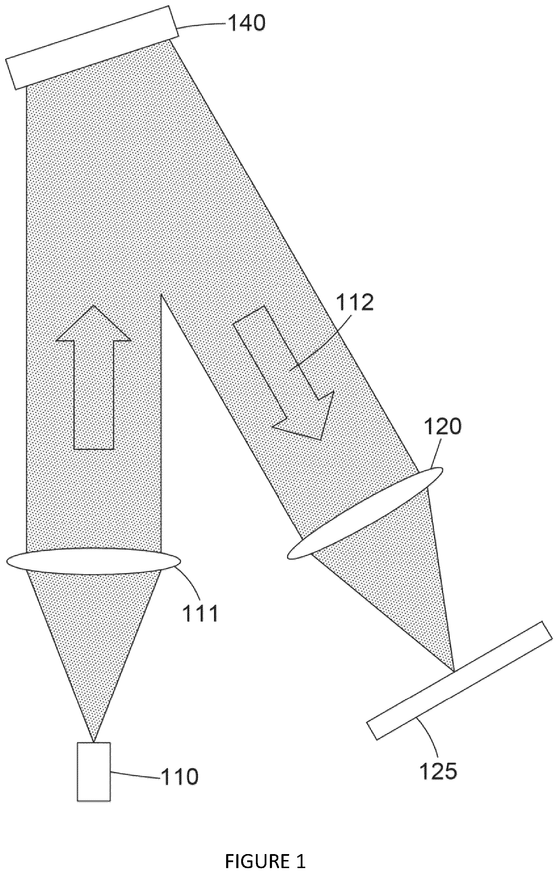

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform In some embodiments of the present disclosure, the lens of the viewer's eye performs the hologram to image transformation.

### Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms. Embodiments relate to Fourier holography and Gerchberg-Saxton type algorithms by way of example only. The present disclosure is equally applicable to Fresnel holography and Fresnel holograms which may be calculated by a similar method. In some embodiments, the hologram is a phase or phase-only hologram. However, the present disclosure is also applicable to holograms calculated by other techniques such as those based on point cloud methods.

In some embodiments, the hologram engine is arranged to exclude from the hologram calculation the contribution of light blocked by a limiting aperture of the display system. British patent application 2101666.2, filed 5 February 2021 and incorporated herein by reference, discloses a first hologram calculation method in which eye-tracking and ray tracing are used to identify a sub-area of the display device for calculation of a point cloud hologram which eliminates ghost images. The sub-area of the display device corresponds with the aperture, of the present disclosure, and is used exclude light paths from the hologram calculation. British patent application 2112213.0, filed 26 August 2021 and incorporated herein by reference, discloses a second method based on a modified Gerchberg-Saxton type algorithm which includes steps of light field cropping in accordance with pupils of the optical system during hologram calculation. The cropping of the light field corresponds with the determination of a limiting aperture of the present disclosure. British patent application 2118911.3, filed 23 December 2021 and also incorporated herein by reference, discloses a third method of calculating a hologram which includes a step of determining a region of a so-called extended modulator formed by a hologram replicator. The region of the extended modulator is also an aperture in accordance with this disclosure.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

### Large field of view using small display device

Broadly, the present disclosure relates to image projection. It relates to a method of image projection and an image projector which comprises a display device. The present disclosure also relates to a projection system comprising the image projector and a viewing system, in which the image projector projects or relays light from the display device to the viewing system. The present disclosure is equally applicable to a monocular and binocular viewing system. The viewing system may comprise a viewer's eye or eyes. The viewing system comprises an optical element having optical power (e.g., lens/es of the human eye) and a viewing plane (e.g., retina of the human eye/s). The projector may be referred to as a `light engine'. The display device and the image formed (or perceived) using the display device are spatially separated from one another. The image is formed, or perceived by a viewer, on a display plane. In some embodiments, the image is a virtual image and the display plane may be referred to as a virtual image plane. In other examples, the image is a real image formed by holographic reconstruction and the image is projected or relayed to the viewing plane. In these other examples, spatially modulated light of an intermediate holographic reconstruction formed either in free space or on a screen or other light receiving surface between the display device and the viewer, is propagated to the viewer. In both cases, an image is formed by illuminating a diffractive pattern (e.g., hologram or kinoform) displayed on the display device.

The display device comprises pixels. The pixels of the display may display a diffractive pattern or structure that diffracts light. The diffracted light may form an image at a plane spatially separated from the display device. In accordance with well-understood optics, the magnitude of the maximum diffraction angle is determined by the size of the pixels and other factors such as the wavelength of the light.

In embodiments, the display device is a spatial light modulator such as liquid crystal on silicon ("LCOS") spatial light modulator (SLM). Light propagates over a range of diffraction angles (for example, from zero to the maximum diffractive angle) from the LCOS, towards a viewing entity/system such as a camera or an eye. In some embodiments, magnification techniques may be used to increase the range of available diffraction angles beyond the conventional maximum diffraction angle of an LCOS.

In some embodiments, the (light of a) hologram itself is propagated to the eyes. For example, spatially modulated light of the hologram (that has not yet been fully transformed to a holographic reconstruction, i.e. image) - that may be informally said to be "encoded" with/by the hologram - is propagated directly to the viewer's eyes. A real or virtual image may be perceived by the viewer. In these embodiments, there is no intermediate holographic reconstruction / image formed between the display device and the viewer. It is sometimes said that, in these embodiments, the lens of the eye performs a hologram-to-image conversion or transform. The projection system, or light engine, may be configured so that the viewer effectively looks directly at the display device.

Reference is made herein to a "light field" which is a "complex light field". The term "light field" merely indicates a pattern of light having a finite size in at least two orthogonal spatial directions, e.g. x and y. The word "complex" is used herein merely to indicate that the light at each point in the light field may be defined by an amplitude value and a phase value, and may therefore be represented by a complex number or a pair of values. For the purpose of hologram calculation, the complex light field may be a two-dimensional array of complex numbers, wherein the complex numbers define the light intensity and phase at a plurality of discrete locations within the light field.

In accordance with the principles of well-understood optics, the range of angles of light propagating from a display device that can be viewed, by an eye or other viewing entity/system, varies with the distance between the display device and the viewing entity. At a 1 metre viewing distance, for example, only a small range of angles from an LCOS can propagate through an eye's pupil to form an image at the retina for a given eye position. The range of angles of light rays that are propagated from the display device, which can successfully propagate through an eye's pupil to form an image at the retina for a given eye position, determines the portion of the image that is 'visible' to the viewer. In other words, not all parts of the image are visible from any one point on the viewing plane (e.g., any one eye position within a viewing window such as eye-box.)

In some embodiments, the image perceived by a viewer is a virtual image that appears upstream of the display device - that is, the viewer perceives the image as being further away from them than the display device. Conceptually, it may therefore be considered that the viewer is looking at a virtual image through an 'display device-sized window', which may be very small, for example 1cm in diameter, at a relatively large distance, e.g., 1 metre. And the user will be viewing the display device-sized window via the pupil(s) of their eye(s), which can also be very small. Accordingly, the field of view becomes small and the specific angular range that can be seen depends heavily on the eye position, at any given time.

A pupil expander addresses the problem of how to increase the range of angles of light rays that are propagated from the display device that can successfully propagate through an eye's pupil to form an image. The display device is generally (in relative terms) small and the projection distance is (in relative terms) large. In some embodiments, the projection distance is at least one - such as, at least two - orders of magnitude greater than the diameter, or width, of the entrance pupil and/or aperture of the display device (i.e., size of the array of pixels).

Use of a pupil expander increases the viewing area (i.e., user's eye-box) laterally, thus enabling some movement of the eye/s to occur, whilst still enabling the user to see the image. As the skilled person will appreciate, in an imaging system, the viewing area (user's eye box) is the area in which a viewer's eyes can perceive the image. The present disclosure encompasses non-infinite virtual image distances - that is, near-field virtual images.

Conventionally, a two-dimensional pupil expander comprises one or more one-dimensional optical waveguides each formed using a pair of opposing reflective surfaces, in which the output light from a surface forms a viewing window or eye-box. Light received from the display device (e.g., spatially modulated light from a LCOS) is replicated by the or each waveguide so as to increase the field of view (or viewing area) in at least one dimension. In particular, the waveguide enlarges the viewing window due to the generation of extra rays or "replicas" by division of amplitude of the incident wavefront.

The display device may have an active or display area having a first dimension that may be less than 10 cms such as less than 5 cms or less than 2 cms. The propagation distance between the display device and viewing system may be greater than 1 m such as greater than 1.5 m or greater than 2 m. The optical propagation distance within the waveguide may be up to 2 m such as up to 1.5 m or up to 1 m. The method may be capable of receiving an image and determining a corresponding hologram of sufficient quality in less than 20 ms such as less than 15 ms or less than 10 ms.

In some embodiments - described only by way of example of a diffracted or holographic light field in accordance with this disclosure - a hologram is configured to route light into a plurality of channels, each channel corresponding to a different part (i.e. sub-area) of an image. The channels formed by the diffractive structure are referred to herein as "hologram channels" merely to reflect that they are channels of light encoded by the hologram with image information. It may be said that the light of each channel is in the hologram domain rather than the image or spatial domain. In some embodiments, the hologram is a Fourier or Fourier transform hologram and the hologram domain is therefore the Fourier or frequency domain. The hologram may equally be a Fresnel or Fresnel transform hologram. The hologram may also be a point cloud hologram. The hologram is described herein as routing light into a plurality of hologram channels to reflect that the image that can be reconstructed from the hologram has a finite size and can be arbitrarily divided into a plurality of image sub-areas, wherein each hologram channel would correspond to each image sub-area. Importantly, the hologram of this example is characterised by how it distributes the image content when illuminated. Specifically and uniquely, the hologram divides the image content by angle. That is, each point on the image is associated with a unique light ray angle in the spatially modulated light formed by the hologram when illuminated - at least, a unique pair of angles because the hologram is two-dimensional. For the avoidance of doubt, this hologram behaviour is not conventional. The spatially modulated light formed by this special type of hologram, when illuminated, may be divided into a plurality of hologram channels, wherein each hologram channel is defined by a range of light ray angles (in two-dimensions). It will be understood from the foregoing that any hologram channel (i.e. sub-range of light ray angles) that may be considered in the spatially modulated light will be associated with a respective part or sub-area of the image. That is, all the information needed to reconstruct that part or sub-area of the image is contained within a sub-range of angles of the spatially modulated light formed from the hologram of the image. When the spatially modulated light is observed as a whole, there is not necessarily any evidence of a plurality of discrete light channels.

Nevertheless, the hologram may still be identified. For example, if only a continuous part or sub-area of the spatially modulated light formed by the hologram is reconstructed, only a sub-area of the image should be visible. If a different, continuous part or sub-area of the spatially modulated light is reconstructed, a different sub-area of the image should be visible. A further identifying feature of this type of hologram is that the shape of the cross-sectional area of any hologram channel substantially corresponds to (i.e. is substantially the same as) the shape of the entrance pupil although the size may be different - at least, at the correct plane for which the hologram was calculated. Each light / hologram channel propagates from the hologram at a different angle or range of angles. Whilst these are example ways of characterising or identifying this type of hologram, other ways may be used. In summary, the hologram disclosed herein is characterised and identifiable by how the image content is distributed within light encoded by the hologram. Again, for the avoidance of any doubt, reference herein to a hologram configured to direct light or angularly-divide an image into a plurality of hologram channels is made by way of example only and the present disclosure is equally applicable to pupil expansion of any type of holographic light field or even any type of diffractive or diffracted light field.

The system can be provided in a compact and streamlined physical form. This enables the system to be suitable for a broad range of real-world applications, including those for which space is limited and real-estate value is high. For example, it may be implemented in a head-up display (HUD) such as a vehicle or automotive HUD.

In accordance with the present disclosure, pupil expansion is provided for diffracted or diffractive light, which may comprise diverging ray bundles. The diffracted light field may be defined by a "light cone". Thus, the size of the diffracted light field (as defined on a two-dimensional plane) increases with propagation distance from the corresponding diffractive structure (i.e. display device). It can be said that the pupil expander/s replicate the hologram or form at least one replica of the hologram, to convey that the light delivered to the viewer is spatially modulated in accordance with a hologram.

In some embodiments, two one-dimensional waveguide pupil expanders are provided, each one-dimensional waveguide pupil expander being arranged to effectively increase the size of the exit pupil of the system by forming a plurality of replicas or copies of the exit pupil (or light of the exit pupil) of the spatial light modulator. The exit pupil may be understood to be the physical area from which light is output by the system. It may also be said that each waveguide pupil expander is arranged to expand the size of the exit pupil of the system. It may also be said that each waveguide pupil expander is arranged to expand/increase the size of the eye box within which a viewer's eye can be located, in order to see/receive light that is output by the system.

### Light channelling

The hologram formed in accordance with some embodiments, angularly-divides the image content to provide a plurality of hologram channels which may have a cross-sectional shape defined by an aperture of the optical system. The hologram is calculated to provide this channelling of the diffracted light field. In some embodiments, this is achieved during hologram calculation by considering an aperture (virtual or real) of the optical system, as described above.

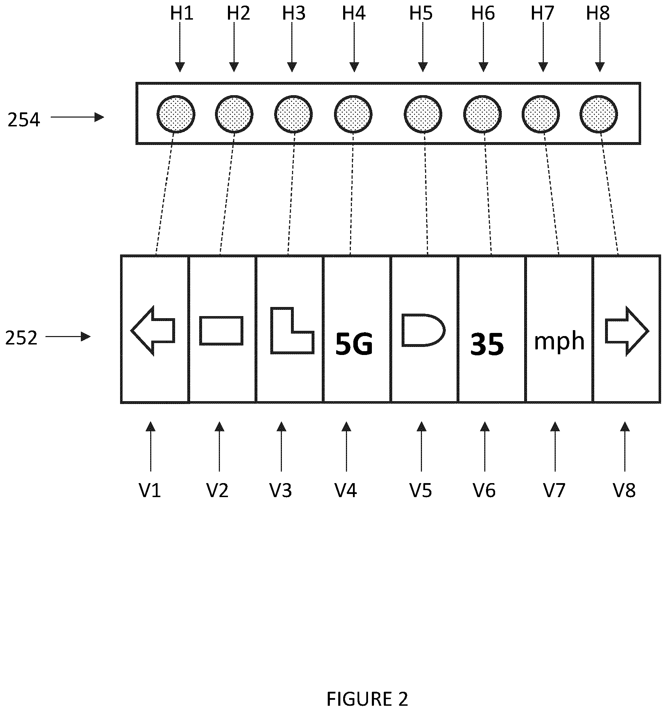

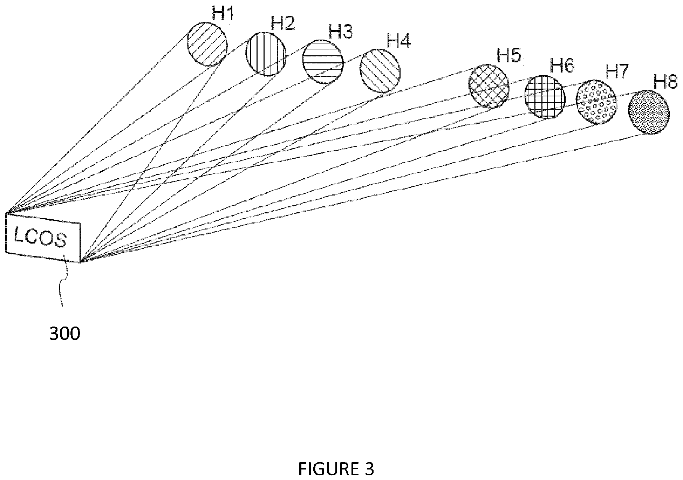

Figures 2 and 3 show an example of this type of hologram that may be used in conjunction with a pupil expander as disclosed herein. However, this example should not be regarded as limiting with respect to the present disclosure.

Figure 2 shows an image 252 for projection comprising eight image areas/components, V1 to V8. Figure 2 shows eight image components by way of example only and the image 252 may be divided into any number of components. Figure 2 also shows an encoded light pattern 254 (i.e., hologram) that can reconstruct the image 252 - e.g., when transformed by the lens of a suitable viewing system. The encoded light pattern 254 comprises first to eighth sub-holograms or components, H1 to H8, corresponding to the first to eighth image components/areas, V1 to V8. Figure 2 further shows how a hologram may decompose the image content by angle. The hologram may therefore be characterised by the channelling of light that it performs. This is illustrated in Figure 3. Specifically, the hologram in this example directs light into a plurality of discrete areas. The discrete areas are discs in the example shown but other shapes are envisaged. The size and shape of the optimum disc may, after propagation through the waveguide, be related to the size and shape of an aperture of the optical system such as the entrance pupil of the viewing system.

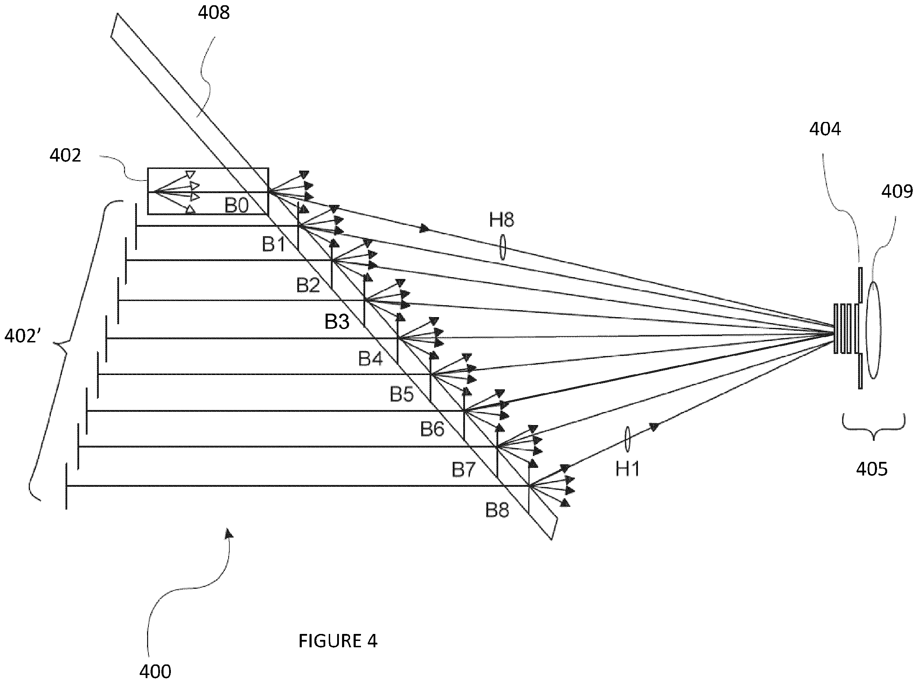

Figure 4 shows a system 400, including a display device that displays a hologram that has been calculated as illustrated in Figures 2 and 3.

The system 400 comprises a display device, which in this arrangement comprises an LCOS 402. The LCOS 402 is arranged to display a modulation pattern (or `diffractive pattern') comprising the hologram and to project light that has been holographically encoded towards an eye 405 that comprises a pupil that acts as an aperture 404, a lens 409, and a retina (not shown) that acts as a viewing plane. There is a light source (not shown) arranged to illuminate the LCOS 402. The lens 409 of the eye 405 performs a hologram-to-image transformation. The light source may be of any suitable type. For example, it may comprise a laser light source.

The viewing system 400 further comprises a waveguide 408 positioned between the LCOS 402 and the eye 405. The presence of the waveguide 408 enables all angular content from the LCOS 402 to be received by the eye, even at the relatively large projection distance shown. This is because the waveguide 508 acts as a pupil expander, in a manner that is well known and so is described only briefly herein.

In brief, the waveguide 408 shown in Figure 4 comprises a substantially elongate formation. In this example, the waveguide 408 comprises an optical slab of refractive material, but other types of waveguide are also well known and may be used. The waveguide 408 is located so as to intersect the light cone (i.e., the diffracted light field) that is projected from the LCOS 402, for example at an oblique angle. In this example, the size, location, and position of the waveguide 408 are configured to ensure that light from each of the eight ray bundles, within the light cone, enters the waveguide 408. Light from the light cone enters the waveguide 408 via its first planar surface (located nearest the LCOS 402) and is guided at least partially along the length of the waveguide 408, before being emitted via its second planar surface, substantially opposite the first surface (located nearest the eye). As will be well understood, the second planar surface is partially reflective, partially transmissive. In other words, when each ray of light travels within the waveguide 408 from the first planar surface and hits the second planar surface, some of the light will be transmitted out of the waveguide 408 and some will be reflected by the second planar surface, back towards the first planar surface. The first planar surface is reflective, such that all light that hits it, from within the waveguide 408, will be reflected back towards the second planar surface. Therefore, some of the light may simply be refracted between the two planar surfaces of the waveguide 408 before being transmitted, whilst other light may be reflected, and thus may undergo one or more reflections, (or 'bounces') between the planar surfaces of the waveguide 408, before being transmitted.

Figure 4 shows a total of nine "bounce" points, B0 to B8, along the length of the waveguide 408. Although light relating to all points of the image (V1-V8) as shown in Figure 2 is transmitted out of the waveguide at each "bounce" from the second planar surface of the waveguide 408, only the light from one angular part of the image (e.g. light of one of V1 to V8) has a trajectory that enables it to reach the eye 405, from each respective "bounce" point, B0 to B8. Moreover, light from a different angular part of the image, V1 to V8, reaches the eye 405 from each respective "bounce" point. Therefore, each angular channel of encoded light reaches the eye only once, from the waveguide 408, in the example of Figure 4.

The waveguide 408 forms a plurality of replicas of the hologram, at the respective "bounce" points B1 to B8 along its length, corresponding to the direction of pupil expansion. As shown in Figure 4, the plurality of replicas may be extrapolated back, in a straight line, to a corresponding plurality of replica or virtual display devices 402'. This process corresponds to the step of "unfolding" an optical path within the waveguide, so that a light ray of a replica is extrapolated back to a "virtual surface" without internal reflection within the waveguide. Thus, the light of the expanded exit pupil may be considered to originate from a virtual surface (also called an "extended modulator" herein) comprising the display device 402 and the replica display devices 402'.

Although virtual images, which require the eye to transform received modulated light in order to form a perceived image, have generally been discussed herein, the methods and arrangements described herein can be applied to real images.

### Two-Dimensional Pupil Expansion

Whilst the arrangement shown in Figure 4 includes a single waveguide that provides pupil expansion in one dimension, pupil expansion can be provided in more than one dimension, for example in two dimensions. Moreover, whilst the example in Figure 4 uses a hologram that has been calculated to create channels of light, each corresponding to a different portion of an image, the present disclosure and the systems that are described herebelow are not limited to such a hologram type.

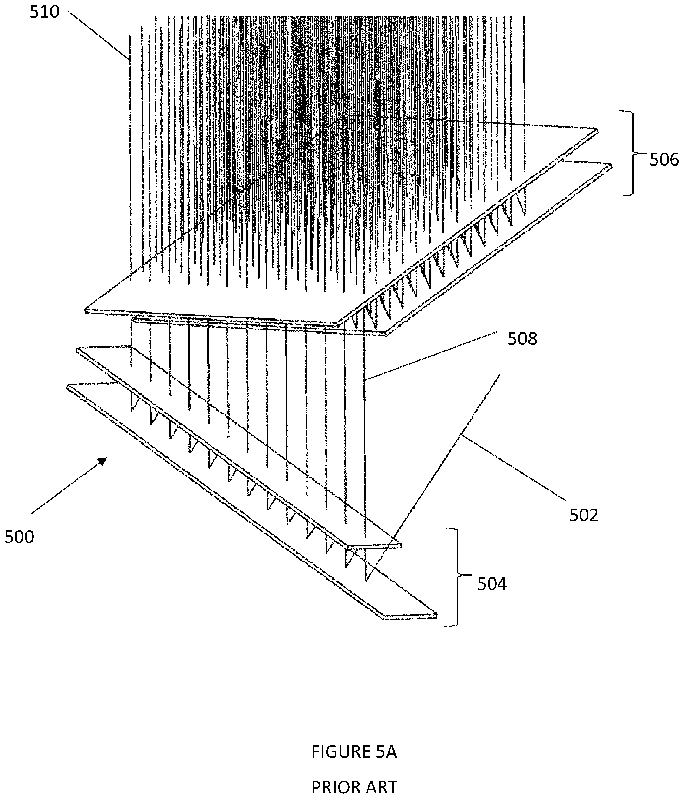

Figure 5A shows a perspective view of a system 500 comprising two replicators, 504, 506 arranged for expanding a light beam 502 in two dimensions.

In the system 500 of Figure 5A, the first replicator 504 comprises a first pair of surfaces, stacked parallel to one another, and arranged to provide replication - or, pupil expansion - in a similar manner to the waveguide 408 of Figure 4. The first pair of surfaces are similarly (in some cases, identically) sized and shaped to one another and are substantially elongate in one direction. The collimated light beam 502 is directed towards an input on the first replicator 504. Due to a process of internal reflection between the two surfaces, and partial transmission of light from each of a plurality of output points on one of the surfaces (the upper surface, as shown in Figure 5A), which will be familiar to the skilled reader, light of the light beam 502 is replicated in a first direction, along the length of the first replicator 504. Thus, a first plurality of replica light beams 508 is emitted from the first replicator 504, towards the second replicator 506.

The second replicator 506 comprises a second pair of surfaces stacked parallel to one another, arranged to receive each of the collimated light beams of the first plurality of light beams 508 and further arranged to provide replication - or, pupil expansion - by expanding each of those light beams in a second direction, substantially orthogonal to the first direction. The first pair of surfaces are similarly (in some cases, identically) sized and shaped to one another and are substantially rectangular. The rectangular shape is implemented for the second replicator in order for it to have length along the first direction, in order to receive the first plurality of light beams 508, and to have length along the second, orthogonal direction, in order to provide replication in that second direction. Due to a process of internal reflection between the two surfaces, and partial transmission of light from each of a plurality of output points on one of the surfaces (the upper surface, as shown in Figure 5A), light of each light beam within the first plurality of light beams 508 is replicated in the second direction. Thus, a second plurality of light beams 510 is emitted from the second replicator 506, wherein the second plurality of light beams 510 comprises replicas of the input light beam 502 along each of the first direction and the second direction. Thus, the second plurality of light beams 510 may be regarded as comprising a two-dimensional grid, or array, of replica light beams.

Thus, it can be said that the first and second replicators 504, 505 of Figure 5A combine to provide a two-dimensional replicator (or, "two-dimensional pupil expander"). Thus, the replica light beams 510 may be emitted along an optical path to an expanded eye-box of a display system, such as a head-up display.

In the system of Figure 5A, the first replicator 504 is a waveguide comprising a pair of elongate rectilinear reflective surfaces, stacked parallel to one another, and, similarly, the second replicator 504 is a waveguide comprising a pair of rectangular reflective surfaces, stacked parallel to one another. In other systems, the first replicator may be a solid elongate rectilinear waveguide and the second replicator may be a solid planar rectangular shaped waveguide, wherein each waveguide comprises an optically transparent solid material such as glass. In this case, the pair of parallel reflective surfaces are formed by a pair of opposed major sidewalls optionally comprising respective reflective and reflective-transmissive surface coatings, familiar to the skilled reader.

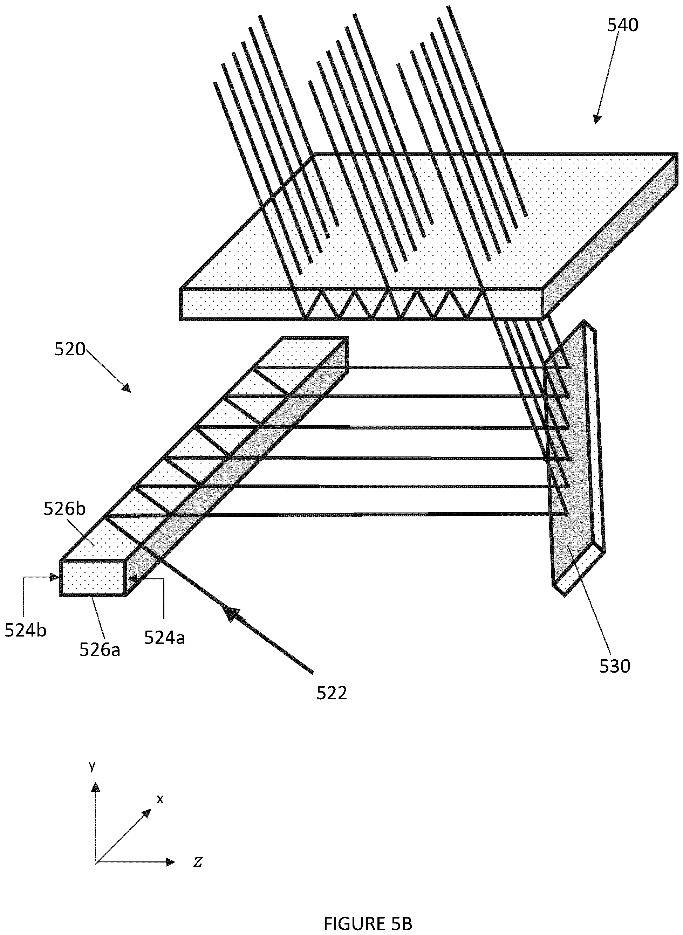

Figure 5B shows a perspective view of a system 500 comprising two replicators, 520, 540 arranged for replicating a light beam 522 in two dimensions, in which the first replicator is a solid elongated waveguide 520 and the second replicator is a solid planar waveguide 540.

In the system of Figure 5B, the first replicator/waveguide 520 is arranged so that its pair of elongate parallel reflective surfaces 524a, 524b are perpendicular to the plane of the second replicator/ waveguide 540. Accordingly, the system comprises an optical coupler arranged to couple light from an output port of first replicator 520 into an input port of the second replicator 540. In the illustrated arrangement, the optical coupler is a planar/fold mirror 530 arranged to fold or turn the optical path of light to achieve the required optical coupling from the first replicator to the second replicator. As shown in Figure 5B, the mirror 530 is arranged to receive light - comprising a one-dimensional array of replicas extending in the first dimension - from the output port / reflective-transmissive surface 524a of the first replicator/waveguide 520. The mirror 530 is tilted so as to redirect the received light onto an optical path to an input port in the (fully) reflective surface of second replicator 540 at an angle to provide waveguiding and replica formation, along its length in the second dimension. It will be appreciated that the mirror 530 is one example of an optical element that can redirect the light in the manner shown, and that one or more other elements may be used instead, to perform this task.

In the illustrated arrangement, the (partially) reflective-transmissive surface 524a of the first replicator 520 is adjacent the input port of the first replicator/waveguide 520 that receives input beam 522 at an angle to provide waveguiding and replica formation, along its length in the first dimension. Thus, the input port of first replicator/waveguide 520 is positioned at an input end thereof at the same surface as the reflective-transmissive surface 524a. The skilled reader will understand that the input port of the first replicator/waveguide 520 may be at any other suitable position.

Accordingly, the arrangement of Figure 5B enables the first replicator 520 and the mirror 530 to be provided as part of a first relatively thin layer in a plane in the first and third dimensions (illustrated as an x-z plane). In particular, the size or "height" of a first planar layer - in which the first replicator 520 is located - in the second dimension (illustrated as the y dimension) is reduced. The mirror 530 is configured to direct the light away from a first layer/plane, in which the first replicator 520 is located (i.e. the "first planar layer"), and direct it towards a second layer/plane, located above and substantially parallel to the first layer/plane, in which the second replicator 540 is located (i.e. a "second planar layer"). Thus, the overall size or "height" of the system - comprising the first and second replicators 520, 540 and the mirror 530 located in the stacked first and second planar layers in the first and third dimensions (illustrated as an x-z plane) - in the second dimension (illustrated as the y dimension) is compact. The skilled reader will understand that many variations of the arrangement of Figure 5B for implementing the present disclosure are possible and contemplated.

The image projector may be arranged to project a diverging or diffracted light field. In some embodiments, the light field is encoded with a hologram. In some embodiments, the diffracted light field comprises diverging ray bundles. In some embodiments, the image formed by the diffracted light field is a virtual image.

In some embodiments, the first pair of parallel / complementary surfaces are elongate or elongated surfaces, being relatively long along a first dimension and relatively short along a second dimension, for example being relatively short along each of two other dimensions, with each dimension being substantially orthogonal to each of the respective others. The process of reflection/transmission of the light between/from the first pair of parallel surfaces is arranged to cause the light to propagate within the first waveguide pupil expander, with the general direction of light propagation being in the direction along which the first waveguide pupil expander is relatively long (i.e., in its "elongate" direction).

There is disclosed herein a system that forms an image using diffracted light and provides an eye-box size and field of view suitable for real-world application - e.g. in the automotive industry by way of a head-up display. The diffracted light is light forming a holographic reconstruction of the image from a diffractive structure - e.g. hologram such as a Fourier or Fresnel hologram. The use diffraction and a diffractive structure necessitates a display device with a high density of very small pixels (e.g. 1 micrometre) - which, in practice, means a small display device (e.g. 1 cm). The inventors have addressed a problem of how to provide 2D pupil expansion with a diffracted light field e.g. diffracted light comprising diverging (not collimated) ray bundles.

In some embodiments, the display system comprises a display device - such as a pixelated display device, for example a spatial light modulator (SLM) or Liquid Crystal on Silicon (LCoS) SLM - which is arranged to provide or form the diffracted or diverging light. In such aspects, the aperture of the spatial light modulator (SLM) is a limiting aperture of the system. That is, the aperture of the spatial light modulator - more specifically, the size of the area delimiting the array of light modulating pixels comprised within the SLM - determines the size (e.g. spatial extent) of the light ray bundle that can exit the system. In accordance with this disclosure, it is stated that the exit pupil of the system is expanded to reflect that the exit pupil of the system (that is limited by the small display device having a pixel size for light diffraction) is made larger or bigger or greater in spatial extend by the use of at least one pupil expander.

The diffracted or diverging light field may be said to have "a light field size", defined in a direction substantially orthogonal to a propagation direction of the light field. Because the light is diffracted / diverging, the light field size increases with propagation distance.

In some embodiments, the diffracted light field is spatially-modulated in accordance with a hologram. In other words, in such aspects, the diffractive light field comprises a "holographic light field". The hologram may be displayed on a pixelated display device. The hologram may be a computer-generated hologram (CGH). It may be a Fourier hologram or a Fresnel hologram or a point-cloud hologram or any other suitable type of hologram. The hologram may, optionally, be calculated so as to form channels of hologram light, with each channel corresponding to a different respective portion of an image that is intended to be viewed (or perceived, if it is a virtual image) by the viewer. The pixelated display device may be configured to display a plurality of different holograms, in succession or in sequence. Each of the aspects and embodiments disclosed herein may be applied to the display of multiple holograms.

The output port of the first waveguide pupil expander may be coupled to an input port of a second waveguide pupil expander. The second waveguide pupil expander may be arranged to guide the diffracted light field - including some of, preferably most of, preferably all of, the replicas of the light field that are output by the first waveguide pupil expander - from its input port to a respective output port by internal reflection between a third pair of parallel surfaces of the second waveguide pupil expander.

The first waveguide pupil expander may be arranged to provide pupil expansion, or replication, in a first direction and the second waveguide pupil expander may be arranged to provide pupil expansion, or replication, in a second, different direction. The second direction may be substantially orthogonal to the first direction. The second waveguide pupil expander may be arranged to preserve the pupil expansion that the first waveguide pupil expander has provided in the first direction and to expand (or, replicate) some of, preferably most of, preferably all of, the replicas that it receives from the first waveguide pupil expander in the second, different direction. The second waveguide pupil expander may be arranged to receive the light field directly or indirectly from the first waveguide pupil expander. One or more other elements may be provided along the propagation path of the light field between the first and second waveguide pupil expanders.

The first waveguide pupil expander may be substantially elongated and the second waveguide pupil expander may be substantially planar. The elongated shape of the first waveguide pupil expander may be defined by a length along a first dimension. The planar, or rectangular, shape of the second waveguide pupil expander may be defined by a length along a first dimension and a width, or breadth, along a second dimension substantially orthogonal to the first dimension. A size, or length, of the first waveguide pupil expander along its first dimension make correspond to the length or width of the second waveguide pupil expander along its first or second dimension, respectively. A first surface of the pair of parallel surfaces of the second waveguide pupil expander, which comprises its input port, may be shaped, sized, and/or located so as to correspond to an area defined by the output port on the first surface of the pair of parallel surfaces on the first waveguide pupil expander, such that the second waveguide pupil expander is arranged to receive each of the replicas output by the first waveguide pupil expander.

The first and second waveguide pupil expander may collectively provide pupil expansion in a first direction and in a second direction perpendicular to the first direction, optionally, wherein a plane containing the first and second directions is substantially parallel to a plane of the second waveguide pupil expander. In other words, the first and second dimensions that respectively define the length and breadth of the second waveguide pupil expander may be parallel to the first and second directions, respectively, (or to the second and first directions, respectively) in which the waveguide pupil expanders provide pupil expansion. The combination of the first waveguide pupil expander and the second waveguide pupil expander may be generally referred to as being a "pupil expander".

It may be said that the expansion/replication provided by the first and second waveguide expanders has the effect of expanding an exit pupil of the display system in each of two directions. An area defined by the expanded exit pupil may, in turn define an expanded eye-box area, from which the viewer can receive light of the input diffracted or diverging light field. The eye-box area may be said to be located on, or to define, a viewing plane.

The two directions in which the exit pupil is expanded may be coplanar with, or parallel to, the first and second directions in which the first and second waveguide pupil expanders provide replication/expansion. Alternatively, in arrangements that comprise other elements such as an optical combiner, for example the windscreen (or, windshield) of a vehicle, the exit pupil may be regarded as being an exit pupil from that other element, such as from the windscreen. In such arrangements, the exit pupil may be non-coplanar and non-parallel with the first and second directions in which the first and second waveguide pupil expanders provide replication/expansion. For example, the exit pupil may be substantially perpendicular to the first and second directions in which the first and second waveguide pupil expanders provide replication/expansion.

The viewing plane, and/or the eye-box area, may be non-coplanar or non-parallel to the first and second directions in which the first and second waveguide pupil expanders provide replication/expansion. For example, a viewing plane may be substantially perpendicular to the first and second directions in which the first and second waveguide pupil expanders provide replication/expansion.

In order to provide suitable launch conditions to achieve internal reflection within the first and second waveguide pupil expanders, an elongate dimension of the first waveguide pupil expander may be tilted relative to the first and second dimensions of the second waveguide pupil expander.

### Combiner shape compensation

An advantage of projecting a hologram to the eye-box is that optical compensation can be encoded in the hologram (see, for example, European patent 2936252 incorporated herein by herein). The present disclosure is compatible with holograms that compensate for the complex curvature of an optical combiner used as part of the projection system. In some embodiments, the optical combiner is the windscreen of a vehicle. Full details of this approach are provided in European patent 2936252 and are not repeated here because the detailed features of those systems and methods are not essential to the new teaching of this disclosure herein and are merely exemplary of configurations that benefit from the teachings of the present disclosure.

### Control device

The present disclosure is also compatible with optical configurations that include a control device (e.g. light shuttering device) to control the delivery of light from a light channelling hologram to the viewer. The holographic projector may further comprise a control device arranged to control the delivery of angular channels to the eye-box position. British patent application 2108456.1, filed 14 June 2021 and incorporated herein by reference, discloses the at least one waveguide pupil expander and control device. The reader will understand from at least this prior disclosure that the optical configuration of the control device is fundamentally based upon the eye-box position of the user and is compatible with any hologram calculation method that achieves the light channeling described herein. It may be said that the control device is a light shuttering or aperturing device. The light shuttering device may comprise a 1D array of apertures or windows, wherein each aperture or window independently switchable between a light transmissive and a light non-transmissive state in order to control the delivery of hologram light channels, and their replicas, to the eye-box. Each aperture or window may comprise a plurality of liquid crystal cells or pixels.

### Replica Distortion and Spacing

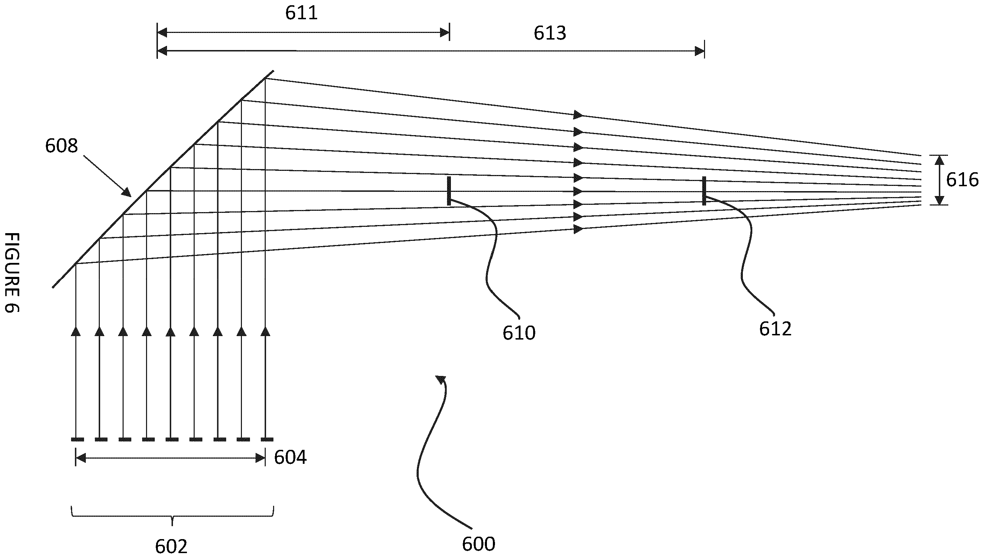

Figure 6 is a schematic representation of part of a display system 600, showing the effect of a curved optical component 608, in this case a windscreen of a vehicle, has on a plurality of replicas 602 of spatially modulated light.

The plurality of replicas 602 are produced from spatially modulated light from a display device (such an LCOS as discussed above, not shown) passing through a replicator or waveguide (also not shown), such as the one discussed above in relation to Figures 4 to 5B. It will be understood by the skilled person that although Figure 6 is side cross-section (2-dimensional) view of system 600, the plurality of replicas 602 would also extend into a third dimension.

In this example, the plurality of replicas are equally spaced over a first distance 604. The spacing of the replicas 602 allowed by this first distance 604 may be arranged (by design) to ensure that conflicting replicas 602 cannot enter the pupil of a viewer simultaneously, which would causing ghosts to be visible to the viewer. Therefore, eye-tracking of the viewer is utilised to track the viewer's eyes within an eye-box so that it can be derived which replicas 602 will be received by the viewer's pupils. This allows the display device to alter the spatially modulated light produced (that forms replicas 602) to ensure that conflicting replicas 602 do not enter the viewer's eyes and cause the aforementioned ghosting. It would be understood that the closer the spacing of the replicas 602, the more accurate the eye-tracking would have to be, as smaller movements of the viewer (and by extension the aperture of their pupils) have a great chance of moving into the path of more replicas. In other words, it would require a smaller movement of the viewer for their pupils to admit a different replica 602 (that may cause the aforementioned ghosting). The higher the accuracy of the eye-tracking required, the higher the amount of computational power and complexity needed to achieve it. As such, this spacing should be at least maintained to preserve the image quality observed by the viewer and to reduce the computational power required to achieve said image quality.

The plurality of replicas 602 interact with curved optical component 608. In this case, curved optical component 608 is a windscreen of a vehicle that acts as an optical combiner. Some of the light of the replicas 602 is reflected by the curved optical component 608 towards the user at a roughly (but not exactly, as will be discussed further below) perpendicular angle. It would be understood that, although Figure 6 only shows the paths of the replicas 602 that are of concern to the present disclosure, some of the light of the replicas 602 would take differing paths than those shown. For example, some light may pass through the curved optical component 608, rather than be reflected by it.

Due to the curvature of the curved optical component 608, the angle of reflection of the reflected light is not exactly perpendicular and indeed varies across the surface of the curved optical component 608. This has the effect, as can be seen in Figure 6, of angling the path of each of the plurality of replicas 602 towards one another. This results in the plurality of replicas 602 being spaced over a second distance 616 that is much shorter than the first distance 602. In other words, the curved optical component 608 compresses the spacing of the plurality of replicas 602. Whilst the plurality of replicas 602 travel in parallel before interacting with the curved optical component 608, after said interaction they are instead converging with one another. In summary, the curved optical component 608 applies a positive optical power to the plurality of replicas 602. This positive optical power causes a number of issues, as discussed below.

As discussed above, it is imperative that the spacing of the replicas 602 remains such that as few replicas 602 as possible enter the pupil at once, to prevent ghosts being visible to the viewer. The positive optical power of the curved optical component 608 compresses the spacing of the replicas 602 and therefore contributes to ghosting in this way. Figure 6 shows a first hypothetical pupil aperture 610 at a first length 611 away from the curved optical component 608. At this first length 611, it is possible to direct only one of the replicas 602 through the aperture 610. As such, if the viewer were positioned such that their eyes were at a length from the curved optical component 608 akin to that of the first length 611, they would not perceive ghosting from the replicas 602. However, a second hypothetical pupil aperture 612 is shown at a second length 613 from the curved optical component 608, which is longer than the first length 611. It can be seen that, as the spacing of the plurality of the replicas 602 has been compressed due to the curved optical component 608, the replicas overlap such that multiple of the replicas 602 will always pass through the second aperture 612. As such, if the viewer were positioned such that their eyes were at a length from the curved optical component 608 akin to that of the second length 613, they would likely perceive ghosting from the replicas 602. As such, the viewer must either move closer to the curved optical component 608 (from the second length 613 to the first length 611) or likely experience the ghosting effect. Moving the viewer in such a way may be impossible in many circumstances, such as when the curved optical component 608 is a windscreen of a vehicle and the viewer cannot be moved closer due to the dashboard and driving position.

The positive optical power of the curved optical component 608 also pushes the virtual image distance (that is, the distance beyond the curved optical component 608 at which the viewer sees the image carried by the replicas 602). This can cause issues with the viewer's perception of the target image - either it is too small for them to clearly see, or it is perceived to be in the wrong location by the viewer (e.g. distanced from any objects in the surroundings that the target image may be drawing attention to).

Finally, the curvature of the curved optical component 608 effectively applies a different phase delay to each of the replicas 602 upon the aforementioned interaction. This delay results in various of the replicas 602 arriving at the viewer at different times, which can cause the image to appear distorted.

### Hardware Correction

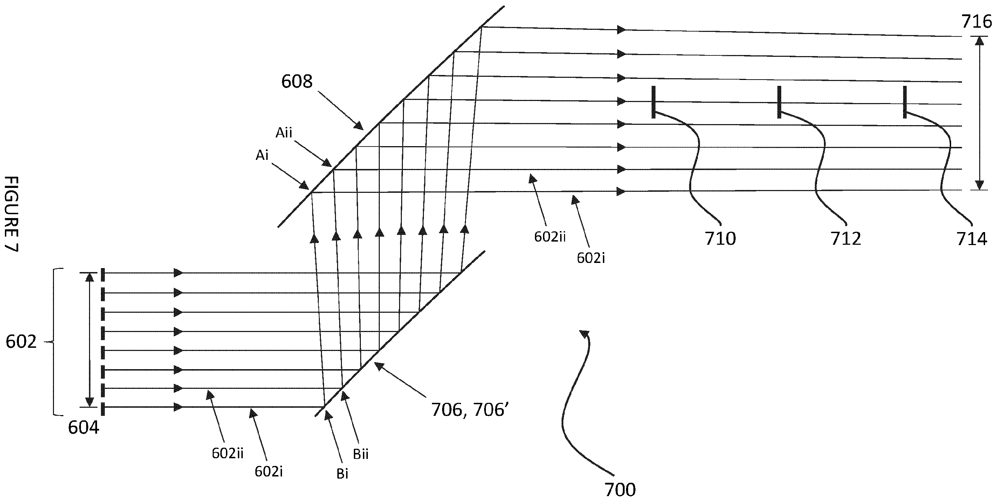

Figure 7 is a schematic representation of part of a display system 700, showing how a light control device 706 can be used to combat the effect of the curved optical component 608 has on the plurality of replicas 602 of spatially modulated light.

As in Figure 6, the plurality of replicas 602 are produced from spatially modulated light from a display device (such an LCOS as discussed above, not shown) passing through a replicator or waveguide (also not shown), such as the one discussed above in relation to Figures 4 to 5B. Due to the aforementioned replicator/waveguide, the plurality of replicas are equally spaced over a first distance 604. It will be understood by the skilled person that although Figure 7 is side cross-section (2-dimensional) view of system 700, the plurality of replicas 602 would also extend into a third dimension.

However, unlike in Figure 6, before interacting with the curved optical component 608, the plurality of replicas 602 interact with the light control device 706. In Figure 7 the light control device 706 is represented by a curved mirror, however other suitable devices are also possible, for example a Fresnel lens, as well as the devices disclosed in the aforementioned UK patent applications 2317637.3 and 2401627.1.

The light control device 706 applies a negative optical power to the plurality of replicas 602. That is, the spacing of the replicas 602 increases as the light travels between the light control device 706 and the curved optical component 608. As a result, when the replicas 602 interact with the curved optical component 608, the corresponding negative optical power from the curvature of the curved optical component 608 is counteracted by the positive optical power from the light control device 706. In other words, the light control device 706 causes the plurality of replicas 602 to diverge by the same amount that the curved optical component 608 causes the plurality of replicas 602 to converge.

The result of this is that the plurality of replicas 602, which arrive at the light control device 706 parallel to one another, remain parallel to one another after interacting with the curved optical component 608. As such, pupil apertures 710, 712, 714 can be placed along the paths of the replicas 602 at any length from the curved optical component 608 and in a way that only one replica 602 can be allowed through. Thus, the viewer can be located anywhere along the path of the replicas 602 and still see the image without the aforementioned ghosting caused by replica overlap and at the correct virtual image distance. Furthermore, as (due to the diverging nature of the light control device 706 caused by its negative optical power) the replicas 602 are spaced at a second distance 716 which is greater than the first distance 602, the computation power required for the eye-tracking is reduced, This is because the larger spacing between the replicas 602 allows for a greater freedom of movement of the viewer before their eyes might encounter a conflicting replica 602 (which may cause ghosting as described above). In other words, as the replicas 602 are spaced further apart, the viewer could move a greater distance before encountering conflicting replicas 602 that could cause ghosting. As such, the eye-tracking can afford to be less precise, resulting in less computational power being required.

Likewise, the phase delay of the replicas compared to one another caused by the curved optical component 608 can also be mitigated by the light control device 706 causing a corresponding phase delay such that each replica 602 is at the same phase. This ensures that, after interacting with the curved optical component 608 and receiving a phase delay, each replica 602 still arrives at the viewer with the same phase, reducing the distortion of the image. This correction by the light control device 706 can be applied to any optical property that the curved optical component 608 imparts upon a replica 602.

However, the specifics of the light control device 706 (e.g. the exact curvature and the phase delay provided by each point across its surface) have to be fine-tuned to the corresponding characteristics of the curved optical component 608. That is, if a first replica 602i is reflected by point Ai of the curved optical component 608, point Ai exerting an optical power +Pi and a phase delay +Di, then the light control device 706 must have a corresponding point Bi in which the first replica 602i is also reflected, point Ai exerting an optical power -Pi and a phase delay -Di. Likewise, if a second replica 602ii is reflected by point Aii of the curved optical component 608, point Aii exerting an optical power +Pii and a phase delay +Dii, then the light control device 706 must have a corresponding point Bii in which the second replica 602ii is also reflected, point Aii exerting an optical power -Pii and a phase delay -Dii. This must be continued for each of the replicas 602 at each of the points across the curved optical component 608 and the corresponding points of the light control device 706. The skilled person would understand that other characteristics beyond optical power and phase delay would also have to be adjusted for each point on the curved optical component 608. As such, the time spent developing and manufacturing a light control device 706 for each curved optical component 608 is high due to the requirement for each point across the light control device 706 having to be finely adjusted in this way.

### Hardware & Software Correction

The inventors have found that pre-adjusting each of the replicas 602 with a software lens can account for any minor differences between the characteristics of the light control device 706 and the curved optical component 608. That is, whilst the majority of the optical power and phase delay (and other characteristics) caused by the curved optical component 608 are counteracted by the correspondingly opposite characteristics of the corresponding point of the light control device 706, further smaller correction of the characteristics of the curved optical component 608 can be achieved using a software lens. In describing this light control device that purposefully only applies a partial correction/compensation, the reference numeral 706' shall be used.

To use the example described above, a first replica 602i is reflected by point Ai of the curved optical component 608, point Ai exerting an optical power +Pi and a phase delay +Di. As before, the light control device 706' has a corresponding point Bi' in which the first replica 602i is reflected. However, in this case point Bi' exerts an optical power -Pi' and a phase delay -Di'. The optical power -Pi' and the phase delay -Di' are not the same as the optical power -Pi and the phase delay -Di described above. The optical power -Pi' of the light control device 706' does not sum to zero with the optical power +Pi of the curved optical component 608 - there would be a remainder of the optical power +Pi of the curved optical component 608. The same is true for the phase delay -Di' of the light control device 706' and the opposing phase delay +Di of the curved optical component 608 (as well as any other characteristics of the curved optical component 608 corrected by the light control device 706').

Instead, there is correction of the optical power +Pi* and the phase delay +Di* (and any other characteristics) provided by the software lens. In this case, the optical power -Pi of the curved optical component 608 sums to zero with a combination of the optical power +Pi' of the light control device 706' and optical power +Pi* of the software lens. The same is true for the phase delay -Di of the curved optical component 608 with a combination of the phase delay +Di' of the light control device 706' and phase delay +Di* of the software lens (and any other characteristics of the curved optical component 608 that need correcting or compensating for). This is repeated for each of the replicas 602 at each of the points across the curved optical component 608 and the corresponding points of the light control device 706'.

Whilst this discussion has been related to complete correction of the curved optical component 608 (i.e. the values associated with the curved optical component 608 and the light control device 706' and software lens summing to zero), the present disclosure is also related to compensation for the curved optical component 608. That is, when the values associated with the curved optical component 608 and the light control device 706' and software lens sum to close to zero so as to produce an improved image for the viewer.

Whilst using a purely software lens solution has been found by the inventors to produce pronounced ghosting of the image, especially in situations with an increased curvature of the curved optical component 608 (which requires a more powerful software lens), using a combination of the hardware solution of the light control device 706' and the software lens is a positive compromise. The majority of the correction/compensation is achieved by the hardware solution of the light control device 706', with the fine-tuning being achieved by the software solution of the software lens.

### LCOS Pixel Control

It has also been found that using negative correction of the curved optical component 608 can improve the quality of the image by increasing the area of pixels available to create the image on the LCOS. By utilising ray tracing the path of each replica 602 from the viewer back to the LCOS (through the various optical components such as the curved optical component 608, light control device 706, 706' and replicator/waveguide), the inventors have found that only a relatively small number of pixels on the LCOS control the appearance of each point of the image visible to the viewer.

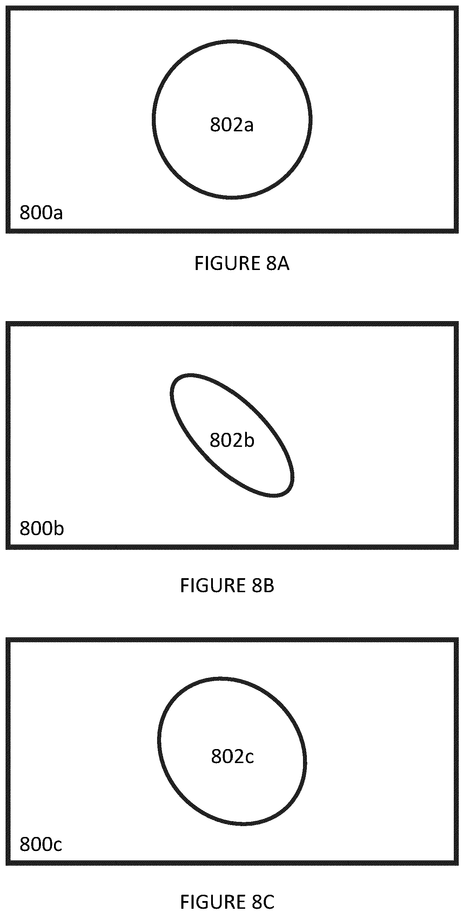

Figure 8A is a diagrammatic representation of an area of the LCOS 800a in a display system where the optical combiner is flat (i.e. a flat optical component rather than the curved optical component 608). In this ideal system (one with no distortion created by the curvature of a curved optical component 608), the area of pixels 802a is responsible for the appearance of a notional point of the intended image from the viewer's perspective. As can be seen, there are a relatively large number of pixels (as the area of the pixels 802a is large and symmetrical), which means the notional associated point of the image can be rendered in good detail.

Figure 8B is a diagrammatic representation of a similar area of the LCOS 800b, but for the system 600 shown in Figure 6 (that is, one with the curved optical component 608 but with no correction in place). Due to the distortions caused by the curvature of the curved optical component 608 (as discussed above), the area of pixels 802b responsible for the appearance of the notional point of the intended image has shrunk and distorted. That is, the area 802b is now less symmetrical and has an increased aspect ratio (where a length of the area 802b from top-left of the diagram to the bottom-right is less than the length of the area 802b from bottom-left to top-right). As such, there are fewer pixels available to render the notional point of the image, resulting in said point being rendered in lesser detail (in a lower quality) than that of the ideal system of Figure 8A.

By using the optical correction of system 700 for the distortion caused by the curvature of the curved optical component 608, the area of the LCOS 800c of Figure 8C is achieved. As can be seen, the area of the pixels 802c is larger and more symmetrical than that of the uncorrected system 600 of Figure 8B. That is, the area 802c is more symmetrical than the area 802b and has an aspect ratio closer to that of area 802a. As such, there are more pixels present in area 802c, so the notional point of the image can be rendered in a greater detail to the viewer.

### Additional features

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

## Claims

1. A display system comprising:
a replicator arranged to receive spatially modulated light and replicate the spatially modulated light to form a plurality of replicas of the spatially modulated light by waveguiding between a reflective surface and a transmissive-reflective surface, the transmissive-reflective surface forming an output surface for the plurality of replicas of the spatially modulated light; and
a light control device located in the optical path of the plurality of replicas of the spatially modulated light downstream from the output surface of the replicator and arranged to provide a first compensation for the curvature of a curved optical component downstream from the light control device, wherein the first compensation is a function of the position on the output surface and is arranged to only partially counteract the curvature of the optical component.

2. The display system as claimed in claim 1, wherein the spatially modulated light is a holographic wavefront and the replicator is arranged to form a plurality of replicas of the holographic wavefront.

3. The display system as claimed in claim 1 or claim 2, wherein the light control device comprises a lens, optionally a Fresnel lens, further optionally wherein the lens is a film, optionally with a thickness of less than 5mm, such as less than 2mm, less than 1mm or less than 0.5mm.

4. The display system as claimed in any preceding claim, wherein the first compensation has an opposite lensing effect to that of the curved optical component.

5. The display system as claimed in any preceding claim, wherein the first compensation is a negative optical power and/or wherein the curved optical component has a positive optical power.

6. The display system as claimed in any preceding claim further comprising:
a processor arranged to determine a hologram of an image and a lens function that provides a second compensation for the curvature of the curved optical component downstream from the light control device, wherein the second compensation is arranged to only partially counteract the curvature of the optical component; and
a display device arranged to spatially modulate light in accordance with a diffractive pattern displayed thereon, wherein the diffractive pattern comprises the hologram and the lens function.

7. The display system as claimed in claim 6, wherein the lens function is a pixelated lens function.

8. The display system as claimed in claim 6 or claim 7, wherein the second compensation is a negative optical power.

9. The display system as claimed in any of claims 6 to 8, wherein the diffractive pattern comprises a superposition or sum of the hologram and the lens function.

10. The display system as claimed in any of claims 6 to 9 further comprising a viewer tracking system arranged to determine a position within an eye-box and correlate said position with a sub-area of the curved optical component and a position on the output surface of the replicator, wherein the first and second compensations compensate for the curvature of the sub-area of the curved optical component.

11. The display system as claimed in any of claims 6 to 10, wherein the first compensation and the second compensation collectively provide a full compensation for the curvature of the curved optical component.

12. The display system as claimed in any of claims 6 to 11, wherein the first compensation is 2 to 10 times the second compensation.

13. The display system as claimed in any of claims 6 to 11, wherein the first compensation provides a virtual image offset correction in the range of 75% to 99% and the second compensation provides a virtual image offset correction in the range of 1% to 25%.

14. The display system as claimed in any of claims 6 to 13, wherein a magnitude of the first and/or second compensation is such that a spacing of each of the plurality of replicas at a viewing plane of the display system is at least half the size of a human pupil.

15. The display system as claimed in claim 14, wherein the spacing is controlled at least in part by each compensation for the curvature of the curved optical component.

16. The display system of claim 14 or claim 15, wherein the spacing of each of the plurality of replicas is greater than or approximately equal to the size of a human pupil.

17. The display system as claimed in any of claims 6 to 16, wherein the compensation for the curvature of the curved optical component is such that a footprint of the viewing pupil on the display device encompasses at least 50 pixels of the display device, optionally 50 to 75 pixels or alternatively optionally 100 pixels.

18. The display system as claimed in any of claims 6 to 17, wherein the compensation for the curvature of the curved optical component is such that a footprint of the viewing pupil on the display device is substantially symmetrical.

19. The display system as claimed in any of claims 6 to 18, wherein the compensation for the curvature of the curved optical component is such that a footprint of the viewing pupil on the display device has an area with an aspect ratio in the range of 1:1 to 1:1.25.

20. A method of processing spatially modulated light, the method comprising:
receiving spatially modulated light at a replicator, the replicator having a reflective surface and a transmissive-reflective surface, the transmissive-reflective surface forming an output surface;
replicating the spatially modulated light to form a plurality of replicas of the spatially modulated light by waveguiding the spatially modulated light between the reflective surface and the transmissive-reflective surface, the plurality of replicas of the spatially modulated light being output from the replicator at the output surface; and
receiving the plurality of replicas at a light control device; and
providing, via the light control device, a first compensation for the curvature of a curved optical component downstream from the light control device, wherein the first compensation is a function of the position on the output surface and is arranged to only partially counteract the curvature of the optical component.
